# EUROPEAN PATENT APPLICATION

(11) **EP 2 873 322 A1**
(43) Date of publication of application: **20.05.2015**
(21) Application number: 13193470.5
(22) Date of filing: 19.11.2013
(51) Int. Cl.: A01N 47/14, A01N 47/26, A01N 47/46, A01N 25/12, A01N 25/26, B01J 2/16, A01P 5/00, A01P 7/00

(54) **Improved fumigant**

(71) Applicant: Taminco, 9000 Gent (BE)
(72) Inventor: Roels, Astrid, 9030 Mariakerke (BE); Vanheule, Bruno, 9840 Zevergem (BE); Martyak, Nick, Doylestown, Pennsylvania 18901 (US)
(74) Representative: Caers, Raphael Frans Ivo

(57) **Abstract**

Disclosed are a granule and a granulate containing metam and/or an oxidized form of metam capable of generating methyl isothiocyanate, wherein the granule has a diameter of 200 to 10,000 µm, and contains the active ingredient in a concentration of at least 75% when the active ingredient is metam and at least 50% when the active ingredient is the oxidized form of metam, and whereby the envelope volume of the granule represents at least 60.0% of the volume occupied by a sphere having as diameter the particle diameter of the granule.

## Description

### FIELD OF THE INVENTION

The present invention relates to the field of fumigation. More particularly, the invention relates to an improved fumigant for use in a variety of fumigation applications.

### BACKGROUND OF THE INVENTION

Fumigation is a method of pest control that completely fills an volume with gaseous pesticides, called "fumigants", to suffocate or poison the pests within. It is utilized for control of pests in buildings (structural fumigation), soil, grain, wood products and produce, and is also used during processing of goods to be imported or exported to prevent transfer of exotic organisms. This method also affects the structure itself, affecting pests that inhabit the physical structure, such as woodborers and drywood termites.

Fumigation is a hazardous operation. Generally it is a legal requirement that the operator who carries out the fumigation operation holds official certification to perform the fumigation as the chemicals used are toxic to most forms of life, including humans.

Grains including corn, wheat, soybean, sorghum, rice and others along with fresh and dried fruits, nuts, coffee, tobacco and cocoa nuts are typically grown during the spring and early summer months, harvested and often stored in bins, railcars, silos, storage bags, cargo ships, truck trailers or grain elevators until needed at a mill of processing centre. During storage, the grains and other harvested crops may become infested with pests such as insects, beetles, mites and moths among others, during which time these pests may consume a portion of the stored products. In addition to partial or total consumption of the stored products, additional economic loss of the products may result from accumulation of frass, exuviae, webbing, and insect cadavers.

Typically when grains and other commodities are harvested, they are warm just prior to storage. Warm commodity temperatures at harvest and during storage, combined with, for example, a grain moisture content in excess of 12-13%wt, are favourable to growth of insect populations and moulds. Insect populations within the stored commodities typically increase during the autumn, peak during late fall or early winter, with reproduction declining through the remainder of winter. If left untreated, the following spring, insect population growth resumes as the commodity warms once again. Also, during colder months, the grains and other commodities stored in very large storage facilities do not cool down significantly over the winter, because of the thermal inertia of the large commodity mass thus providing ideal conditions for an increase in insect population.

High levels of such insect detritus may result in a grain that is unfit for human, poultry, swine and cattle consumption, thus resulting in a loss of profit for the farmer and the grain storage facility. Grains such as wheat when sold are in the USA assigned a U.S. Grade from No. 1 to 5. The premium wheat grade U.S. No. 1 requires that a bushel of wheat weighing a minimum of 58 US pounds should have less than two percent damaged kernels, and there may also be no more than one live insect injurious to grain in a 1 kg sample (32.57 dry ounces). Some buyers set a no-live insect standard. Also flour millers set high quality standards for stored grains, typically not accepting grain with any live insects and preferring grain with few or no insect-damaged-kernels (IDK) per sample, the latter sometimes affording a premium price.

In a similar manner, wood and wood products such as pallets that are stored for a given period of time are also susceptible to infestation by insects and other pests.

To control rapid infestation with insects or other pests, farmer and commodity storage facilities apply an integrated pest management (IPM) practice. IPM may include adequate sanitation of the storage facilities prior to commodity arrival, frequent monitoring of the commodity or wood products once stored, possible aeration to cool the stored goods and reduce moisture. IPM often also includes fumigation as a technique for treatment of the stored goods.

Besides manually cleaning the empty storage facilities, chemical treatment may be done to minimize the propensity of future pest or fumigation. Suitable chemical products may for instance be selected from cyfluthrin, chlorpyrifosmethyl, a mixture of the previous two, diatomaceous earth, malathion, chloropicrin, and phosphine. Chloropicrin and phosphine are also considered being "empty bin fumigants".

So-called "protectants" may also be used on grain, tobacco, cocoa, dried fruits and nuts, and wood, to slow insect growth. Such protectants are sprayed directly onto the commodities and wood products, going into the storage facility or already in storage. Suitable active ingredients for such protectants are for instance 2,2-dichlorovinyl dimethyl phosphate (DDVP), chlorpyrifosmethyl, a mixture thereof with cyfluthrin, methoprene, malathion, and pyrethrins.

A major issue with such protectants is that they do not kill insects inside the grain kernels or embedded in wood crevices or buried deep in used animal litter. New generations of insects are likely to emerge with time.

Fumigation is at treatment process whereby toxic gasses are dispersed throughout the commodity storage facilities permeating through the grain commodities, wood products or other valuable consumable commodities, killing all insects and other pests. Fumigation techniques offer various advantages over protectant treatments. Fumigation typically offers a broader spectrum of control, because most commonly used fumigants are toxic to all forms of life including egg, pupae, larva and adult stages. A further advantage is that rodents and other ground pests are typically also killed in the fumigation treatment. Fumigation treatment kills the pests very rapidly, and is able to control pests also in inaccessible areas. Fumigation may thus achieve complete elimination of all pests. The fumigant leaves little to no residue of the fumigant in or on the stored commodities. Fumigation is also typically lower cost, as it is typically less expensive than repeated treatments with other types of pesticides.

Fumigants are usually added from a few hundred up to several thousand parts per million (ppm) of active ingredient, and from one to ten days of treatment depending on the type of fumigant, the degree of infestation, the temperature of the stored product and the type of insect. Another issue to take into account when using fumigants is the various stages of the insect's or pest's lifecycle. For example, most insects go through complete metamorphosis meaning they have one or more egg stages, one or several larval stages, a pupa stage and the adult stage. Mites are not insects but more closely related to spiders and ticks. Mites also possess four life stages including an egg, larval, nymph and adult stage. Insects are most susceptible to fumigation control during their larval and adult stages, because the insect breathes rapidly and thus readily inhales a dose of the fumigant which is lethal. Insects in their egg and pupa stage often do not breathe sufficiently for the fumigant to work adequately.

Several gas fumigants are used today. These include methyl bromide (MB), phosphine (PH₃) and sulphuryl fluoride (SO₂F₂). Each of these fumigants is highly effective in killing pests in and on stored grains and other commodities, yet each brings its own inherent limitations.

Methyl bromide is effective in killing all four stages of the insect's lifecycle, was in use for decades, but is now almost completely phased out in most countries because it is deemed being an ozone depleting agent under the Montreal Protocol. In the USA it is only allowed for use in so-called Critical Use Exempt applications.

Phosphine is currently the most popular fumigant, used in all fumigation applications except flour mills. It may be applied to storage facilities as a highly purified and concentrated (>95% PH₃) compressed gas, in which case it is rapidly mixed with air to minimize the explosion risk. It is also offered as a gas in diluted form (2% PH₃ in CO₂), for direct injection into the storage bins and dispersion with fans. The most common method of applying phosphine is the use of metallic phosphide pellets such as aluminium phosphide (AIP) or magnesium phosphide (Mg₃P₂). These pellets contain approximately 50% metallic phosphide along with inert ingredients. The pellets generate PH₃ when exposed to moisture in the air.

Phosphine is typically used from 200-700 ppm over 4-10 days of exposure to ensure complete kill. Such a long time is required because PH₃ is not as effective on all stages of the insect's lifecycle. Also recently, insects have become more resistant to phosphine, thus requiring even higher dosages and longer exposure times to ensure complete mortality.

In addition, phosphine is not commonly used in flour mills because of its inherent corrosivity on electronic components, in particular those containing copper, silver and/or brass. Electronic parts and metallic infrastructure that contain copper, silver, iron and other metallic parts are corroded by phosphine at the concentrations normally used for fumigation.

Compressed gasses of phosphine such as 99% PH₃ are used to control stored product pests yet suffer from the potential of phosphorous-polymer formations, which may result in an explosive mixture at the facility.

Sulphuryl fluoride (SF) is also being used as a grain and commodity fumigant. It is highly effective on a large number of insects and pests. SF (as 99.8% SO₂F₂) is made available in pressure cylinders and is directly injected into the storage bins.

SF has the advantage over phosphine in that it is not corrosive to metals and that it is not explosive. SF is typically added at a concentration x time profile ("CT") of 8000-12000 ppm over 24-48 hours. The high concentration allows rapid mortality of the pests.

The use of SF has however several drawbacks. SF does not adequately kill the egg-stage of the insect, so infestation may reoccur with time. SF is most effective at temperatures above 20°C and should optimally be applied at 25-35°C. This temperature range is however not always readily achievable, depending on climate and time of year of the fumigation treatment. More recently, authorities such as the US Environmental Protection Agency (EPA) have scrutinized the use of fluoride-containing compounds into the environment. SF is currently under US EPA review and its use runs the risk of being curtailed or even complete eliminated if deemed unsafe to the environment.

Fumigation is also used in agriculture and horticulture for treating soil. Soil fumigation is an important agricultural technique to control pests in fields infested with plant diseases. Parasitic nematodes are one especially challenging pest that often requires these kinds of measures for its control or eradication. Several different pesticides are commonly used for soil fumigation. One of the most toxic, methyl bromide, has become controversial, as described above, and is being phased out because of its ozone depletion potential.

Parasitic nematodes, small worm-shaped organisms that live in the soil, can badly damage crops, as can a wide array of insect pests, fungi and bacteria. If the concentration of these pests in the soil exceeds certain levels, the yield will suffer accordingly. If carried out properly, soil fumigation can control or eliminate many of these common pests in the field prior to planting. Most of the pesticides used for fumigation have only limited success in killing weed seeds, methyl bromide being a notable exception.

Some soil types are more amenable to soil fumigation than others. Clay soils, for instance, tend to slow the diffusion of the fumigant or pesticide through the soil and permit some pests to survive unscathed. Excess organic matter like peat or mulch can absorb the pesticide or fumigant and prevent it from working through the soil. The soil temperature must be over 50°F (10°C) for fumigation to work properly, although high temperatures can sometimes yield poorer results as well. Fumigation requires moderate soil moisture, although rain the day after fumigation can severely reduce the effect of the treatment.

Soil fumigation is typically performed months before the planting/seeding of the crops, but under well-monitored conditions may be done only weeks before the planting or seeding.

With the phase-out of methyl bromide, so-called "metam" has become a widely used soil fumigant intended to produce pesticidal effects for a broad spectrum of pests and other living organisms such as fungi, and the associated diseases. Metam, a short name for N-methyldithiocarbamate or CH₃-NH-C(S)-S⁻ X⁺, has become widely used as a soil fumigant. Its most commonly used form is the sodium form, also addressed as "sodium metam", and to some extent the potassium variety. Metam is able to readily release a highly poisonous gas methyl isothiocyanate (MITC, CH₃-N=C=S, C₂H₃NS), also being a strong lachrymator having a strong odour. The release of MITC is a result of an oxidation reaction, which may for instance be triggered by contact with the atmosphere, a change in pH of the environment, metallic or ionic molecules, organic matter or moisture, in particular oxygen and/or humidity.

It is the MITC which is responsible for the mortality of the soil pests. MITC is a naturally occurring compound, in horse radish. Its half life in the atmosphere is about 5 days due to breakdown under atmospheric and UV-exposure. The current commercial use of metam as soil fumigant is based on this capability.

Metam sodium is currently commercially available as a typical 42%wt aqueous solution, or 510 g/litre. Metam potassium is currently commercially available as a typical 500 g/litre and 690 g/litre aqueous solution.

The metam is typically injected and mixed into the top ±25 cm (1 ft) of reworked agricultural top soil under sealed condition, the soil subsequently being compacted and pressed back into position. The effectiveness of the soil treatment is heavily dependent on the method of application. Suitable techniques are (i) injection using a spade injector as explained above, suitable for fungi and weed control, (ii) distribution within the soil by using the irrigation system, suitable for control of weeds, fungi and nematodes, and (iii) drip irrigation, suitable for also indoors, on stony fields, and for very localized disinfection.

Fumigation is a hazardous operation. Generally it is a legal requirement that the operator who carries out the fumigation operation holds official certification to perform the fumigation, because the chemicals used are toxic to most forms of life, including humans. Fumigation is typically applied by specialised operators, under heavy use of personal protection equipment (PPE).

The use of liquid metam for soil fumigation has the drawback that the MITC release starts immediately upon exposure of the metam solution to the air and its contact with the substrate, an exposure and contact which are very intense due to the liquid form. This causes a significant escape of MITC before the fumigated soil is pressed back into position. This released MITC represents an exposure risk to the operators, but also a possible nuisance to neighbours due to its odour and lacrymating effect. This release pattern also represents a loss of valuable raw materials, requiring a higher dose to obtain the same effect.

Another problem with liquid metam is that it is not suitable for use in the fumigation of most commodities, such as on grain in storage bins, because of the amount of water being present. In addition, aqueous metam in direct contact with grain and other commodities may not adequately result in MITC generation and possibly leave unwanted residue of metam.

There has therefore been a need for metam or other MITC releasing fumigants which contains less water and of which not every molecule is readily accessible for direct oxidation and hence release of MITC.

V.Ducom, "Methyl isothiocyanate used as a grain fumigant", Proceedings of the 6th International Working Conference on Stored-product Protection, Volume 1, 1994, used solid crystals of MITC to kill the embedded insects in wheat. Premature sublimation and worker safety however impaired its use on commercial scale.

There have therefore been attempts to develop other solid fumigants, for instance a solid form of metam, or a derivative thereof capable of releasing MITC upon oxidation, and their use in fumigation.

Roberts and Thomason, "Screening of a Granular Chelate of Metham-Zinc for Nematicidal Activity Using Citrus and Root-knot Nematides", Annals of Applied Nematology, 2:11-14, 1988, disclosed, as alternative to liquids containing metham-sodium, a granular formulation of a chelate of metham-zinc (CMZ) in a jar soil screening, in a greenhouse test and in a field test on infected tomatoes. The fine dry granule contained 79% metham-zinc active ingredient by weight and 21% moisture, and apparently released MITC slowly when mixed into the soil. The granule was tested against 1,3-Dichloropropene as the control. It is not disclosed how the CMZ was obtained, nor whether similar chelates are obtainable with other metals besides zinc.

GB 894125 discloses a powder preparation containing 20% of N,N-dimethylthiuram disulphide (DMTDS), the remainder being a carrier material such as kaolin or a bleaching earth known under the tradename of "Tonsil", and its use in soil as a nematocide. DMTDS is a metam derivative, obtainable by dimerization/oxidation of metam. It is capable of releasing MITC upon further oxidation. In DE 4475937, to a nematocide formulation containing 20% DMTDS on a Tonsil carrier in the form of shavings are added between 1% and 5% each of stearic acid and calciumchloride. For the storage stability test, the weight loss of more concentrated compositions containing 90% DMTDS and only 7-9% Tonsil was measured.

Also GB 894018 discloses that DMTDS in a form not further specified may be used in a formulation together with a conventional inert vehicle with an absorptive character, such as kaolin, diatomaceous earth, calcium silicate and magnesium aluminium silicate. The result was ground fine to particles with a size of less than 20 microns, as a result of which a spraying powder with excellent uniform dispersion stability was obtained.

US 3198699 discloses the preparation of a precipitate from the condensation of 1.5-3 moles of formaldehyde per 1 mole of a sodium or ammonium salt of N-methyl dithiocarbamate, and its use in soil fumigation against eelworms, in comparison with DMTDS. The document suggests that the condensation products may be granulated with a carrier or precipitated on a granulated carrier such as attapulgite.

US 5925368 discloses a method for mixing a polymer and an active ingredient which may be sodium N-methyl dithiocarbamate in a 90/10 weight ratio, subsequently melting the polymer such that the active ingredient is embedded in the polymer matrix. The resulting product may be used for preserving wooden objects in contact with soil for a prolonged period of time.

US 4439488 discloses how Vapam, i.e. a 32.7% aqueous solution of sodium methyldithiocarbamate was mixed with ungelatinized pearl corn starch and water to form a slurry, the slurry being pasted with aqueous NaOH and converted to a rubbery gel by the addition of finely pulverized boric acid. The product was coated with pearl starch and after drying contained 13.3% active ingredient.

Metam and MITC have also been tested as a grain and wood fumigant. D.B.Miller and J.J.Morrell, "Stability and Methylisothiocyanate Production of 12 Potential Solid Fumigants for Controlling Wood Decay", Holzforschung, Vol. 43, No. 3, 1989, disclose how solid sodium N-methyldithiocarbamate was produced from commercial Vapam (33% NaMDC dihydrate), and tested as a fumigant more stable than its liquid form for controlling wood decay, amongst a wider series of other powdered alternatives including DMTD, i.e. the compound which is also addressed as DMTDS.

These solid forms of fumigants are all in the powder form. They therefore suffer from the drawback of "dusting", which increases the risk for inhalation upon use, and also for drift during application, in particular in soil fumigation. Such drift represents an extra exposure risk to the operators, but also an extra nuisance to neighbours due to the odour and lacrymating effect. The drift also represents a loss of valuable raw materials, requiring a higher dose to obtain the same effect.

S.T.Lebow and J.J.Morrell, "Methylisothiocyanate fumigant content of douglas-fir heartwood at various moisture levels after treatment with solid sodium N-methyldithiocarbamate", Wood and Fiber Science, 25(1), 1993, pp. 87-90, tested the NaMDC powder as described in the Miller and Morrell 1989 article discussed above, and also manufactured pellets from this powder by adding small amounts of water, pressing the mixture into pellets and solidifying the mixture upon drying. The authors state that the pellets have major safety advantages in terms of reduced dust during application, but that they reduce the initial area of chemical/wood contact. The pellets were introduced into a 0.9 cm diameter by 1.9 cm deep hole drilled halfway down the length of the block of wood. The article does not disclose the actual shape of the pellet. The most convenient form of pellet would have a cylindrical shape of which the height would be of the same order of magnitude as the diameter. It is expected that only one, or at most a very small number of such pellets would have been required for applying the prescribed doses of 50 or 150 mg into each hole in the wood block. It is therefore expected that the pellets were handled individually or in small numbers at one time.

The drawback of the pellets of Lebow and Morrell is that they are regular in shape and have sharp edges. These pellets are not fully free-flowing when used in bulk. An additional problem is that, upon use in bulk, these pellets are readily damaged by attrition, especially at the sharp edges, leading to dust formation. The pellets of Lebow and Morrell would thus still suffer from dust formation, when used in bulk for soil fumigation, which still leads to the problems of drift mentioned above. Such drift indeed still represents an extra exposure risk to the operators, and an extra nuisance to neighbours due to the odour and lacrymating effect. The drift also represents a loss of valuable raw materials, requiring a higher dose to obtain the same effect.

GB 1281716 discloses that 0.5-2 mm granules obtained by grinding compressed tablets of a high polymer may be impregnated with 5-10% of an active ingredient, including particular N,N-dialkyl and diallyl-S-n-propyl-dithiocarbamates.

FR 2080866 discloses a granule of a size larger than 100 micrometer (µm) containing up to 50% weight of sodium N-methyl dithiocarbamate wherein a core comprises the sodium metam in a formulation with fertilizer and clay and is coated with an envelope composed of an agglomerate of particles bound to each other by a water insoluble macromolecular resin. Such coated granules are stated to develop low amounts of dust particles smaller than 100 µm in attrition tests.

There therefore remains a need for a solid fumigant in a solid form which is less susceptible for dust formation when used in bulk for soil fumigation, and which is nevertheless highly concentrated in the precursor of MITC.

The present invention aims to obviate or at least mitigate the above described problem and/or to provide improvements generally.

### SUMMARY OF THE INVENTION

According to the invention, there is provided a granule, a granulate comprising such granule, a process for producing and employing the granule or the granulate, and a use of the granule or the granulate, as defined in any of the accompanying claims.

The present invention therefore provides a granule containing as active ingredient a compound selected from the ammonium, alkali metal and alkaline earth metal salts, such as the sodium, potassium, and calcium salt, of methylaminomethanedithionate, an oxidized form of N-methyldithiocarbamate that is capable of generating methyl isothiocyanate upon further oxidation, and combinations of such compounds, wherein the granule has a particle diameter in the range of 200 to 10,000 µm, and whereby the granule contains the active ingredient in a concentration of at least 75% by weight when the active ingredient is the salt of methylaminomethanedithionate and at least 50% by weight when the active ingredient is the oxidized form of N-methyldithiocarbamate, and whereby the envelope volume of the granule represents at least 60.0% of the volume occupied by a sphere having as diameter the particle diameter of the granule.

Methylaminomethanedithionate may also be addressed as metam, with the formula CH₃-NH-C(S)-S⁻ X⁺.

One very suitable oxidized form of N-methyldithiocarbamate may also be addressed as bis-metam, with the formula CH₃-NH-C(S)-S-S-C(S)-NH-CH₃, also known as bis-(methylthiocarbamoyl)-sulphide, CAS No. 2438-90-6.

Methyl isothiocyanate may also be addressed as MIT or MITC, with the formula CH₃-N=C=S.

As stated above, the release of MITC is a result of an oxidation reaction, which may for instance be triggered by contact with the atmosphere, a change in pH of the environment, metallic or ionic molecules, organic matter, inorganic matter or moisture, in particular oxygen and/or humidity.

We have found that the granule according to the present invention brings several advantages.

One advantage is that the granule inherently has less sharp edges as compared to the presumable cylindrical pellet disclosed by Lebow and Morrell in their 1993 paper in Wood and Fiber Science, which is discussed above. Because such sharp edges are vulnerable to attrition when the particles are moved in bulk, the granule according to the present invention brings the advantage of less loss by attrition in comparison with the pellet of Lebow and Morrell, and hence bring a reduced risk for dusting, in particular when used in soil fumigation, which hence brings the benefit of less drift of the active substance during soil fumigation. Such drift indeed represents an extra exposure risk to the operators, and an extra nuisance to neighbours due to the odour and lacrymating effect. The reduced drift thus represents an improved use of valuable active ingredient, and a reduction of the required dose to obtain the same effect.

A second advantage is that the granule according to the present invention has no flat outer surfaces having any significant size relative to the volume occupied by the granule. As compared to regular geometric shapes, such as the cylindrical pellet of Lebow and Morrell having a flat top and bottom, the granule according to the present invention brings the advantage of a strongly reduced tendency to stick to another flat surface, such as to the wall of a container or to a flat surface of another similar granule. The granule according to the present invention therefore offers the advantage of being better free-flowing when used in bulk, because it has a lower tendency to stick to the wall of its container, or to other similar granules.

The granule according to the present invention also brings the advantage of a delayed release of most of the active ingredient in the granule, as compared to powder forms of the same ingredient, and even move as compared to liquid solutions of the same ingredient. When the granule according to the present invention becomes exposed to the oxidizing agent or water, only the outer surface of the granule becomes exposed and may start to generate the fumigating gas MITC, while the core of the granule remains untouched. Only after a first layer of active ingredient has reacted, does the oxidizing agent or the moisture gain access to the underlying layer of active ingredient, which only then may start to react and generate MITC. The release pattern of MITC over time which is offered by the granule according to the present invention is therefore significantly delayed in comparison with the pattern of the same fumigant in powder form, and even more delayed in comparison with the release pattern of the same fumigant in solution form, which is even more directly accessible. This brings the advantage of less exposure risk immediately upon application of the fumigant and also a lower level of exposure to MITC immediately upon and shortly after the application. This reduces the risk for any possible harmful effects, brings a higher utilization as intended of the active ingredient, and hence allows for a lower dosing of the active ingredient in order to assure the target effects.

In another embodiment, the invention further provides for a granulate containing the granule according to the present invention, the granulate having a weight average particle diameter in the range of 250 to 10,000 µm and whereby the granulate contains the active ingredient in a concentration of at least 75% by weight when the active ingredient is the salt of methylaminomethanedithionate and at least 50% by weight when the active ingredient is the oxidized form of N-methyldithiocarbamate, e.g. bis(methylthiocarbamoyl)-sulphide.

The applicants have found that the granulate according to the present invention offers the same advantages as those which have been listed for the granule herein above. The applicants submit that the advantages apply even better to the granulate according to the present invention, as compared to the single granule according to the present invention by itself. In short, the granulate according to the present invention is much better free flowing, represents a much lower risk for dusting when used in bulk, such as in soil fumigation, and offers a delayed release pattern as compared to the conventional powder and dissolved form of the same active ingredient.

In another embodiment, the invention provides that the granule or the granulate according to the present invention is coated, whereby the coating may be organic and/or inorganic, including combinations of organic and inorganic coatings, such as a coating based on sodium carbonate. The applicants have found that the coating may be beneficial irrespective of the geometrical shape of the granule, hence also when the envelope volume of the granule represents less than 60.0% of the volume occupied by a sphere having as diameter the particle diameter of the granule. The applicants have found that the benefit brought by the coating also applies to the granulate as specified above but wherein the envelope volume of the granule may also represent less than the 60.0% of the specified sphere volume.

The coating brings the additional advantage that the release pattern, in terms of concentration over time, of the fumigant gas MITC may be even further delayed.

With the powder form or the aqueous dissolved form of the active ingredient, a problem is that the MITC release tapers off over time. The fumigating effect is based on a combination of exposure to a sufficient concentration of MITC ("C") during a sufficient period of time ("t"), hence it is the "C x t" or "CT" which needs to be lethal to the pests being controlled. This means that a short release peak may be much less effective as compared to an even lower exposure but over a longer period of time. The granule and the granulate according to the present invention bring a release pattern which is already delayed in comparison with the powder or dissolved form of the active ingredient. In some applications, such as soil fumigation, the release pattern of the granulate or granule according to the present invention may still comprise a part which may be considered premature release, and which entails the disadvantages already mentioned above in a similar context.

For this reason, there remains thus a high desire for a further delayed release fumigation procedure, primarily for soil fumigation, but which may as well be useful with the fumigation of agricultural, horticultural or forestry products during storage.

The ideal release delayed release profile for a soil fumigant would be the following:

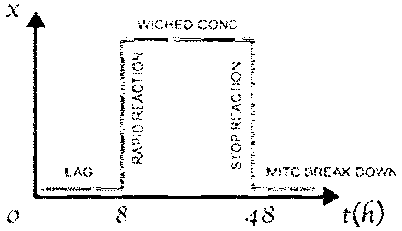

For grain fumigation, a similar profile to that above is ideal but the preferred timing for the MITC evolution are: lag phase: 0-2 hours to allow the fumigator to leave the facility, rapid MITC evolution: 2-20 hours, halt of MITC evolution at about 24 hours, MITC aeration after 24-36 hours.

MITC would ideally need to only start being released after about 8h post start of the application, i.e. when the worker has left the field. Ideally the desired concentration of MITC in the soil should be built quickly. About 48h after start of the application, all the MITC should ideally have disappeared from the soil. At that moment, the soil should be ready for seeding or planting, and any phytotoxic effects should thereby be avoided. The same applies for the fumigation of agricultural products, for instance for grain fumigation. A coating may create a lag time post start of the application. As part of the application procedure, there may be provided a clear trigger for the granule or granulate to release MITC. This may for instance be achieved by moisturizing the granules.

The coating of the granule or granulate may be designed such that the release pattern may approach the ideal release pattern as much as possible. Also the timing may be adapted to the particular application, e.g. the particle intended for soil fumigation may be coated with a coating which is more permeable to water, while the particle intended for grain fumigation may be coated with a coating which keeps more of the water out, yet offers a more ready passage for oxygen and/or MITC.

In another embodiment, the present invention provides for a process for the production of the granule or the granulate according to the present invention comprising the step of spray granulating, which is a form of spray drying, of an aqueous form of the active ingredient in a spray dryer using a heated flow of a non-oxidizing atmosphere or gas, such as N₂, preferably by using the gas flow to keep a bed of the granulate in fluidized condition. Suitable granulation production processes may for instance be based on the disclosures in WO 2010/072842 and US 2011/0287140, where such techniques are described for choline chloride, including the adaptations necessary in view of the different substance.

The applicants have found that the spray granulation using a fluidized bed is a very convenient method for producing a granulate having a fairly uniform particle size distribution. The applicants have found that in such a production method, the smaller particles are more readily lifted inside the bed, while the larger particles have the tendency to sink to the bottom of the fluidized bed, where they may readily be removed as product. The additional benefit is due to the movement of the particles, and the frequent contact between the particles. During this movement and contact, the particles continue to grow by attracting an outer layer of the sprayed liquid solution of the active ingredient, the solution gradually converting, first into a syrup and later into a paste and further into a highly concentrated crystal form by the evaporation of the solvent, typically water. Due to the combination of this solidification process and the contact between the particles, the shape of the granules becomes more and more compact, in the direction of a ball shape, i.e. taking a shape without sharp edges and each occupying an increasing part of the volume enclosed by the sphere having as diameter the particle diameter of the granule.

In another embodiment, the present invention provides for the use of the granule or the granulate according to the present invention for the fumigation of a substance selected from the list consisting of soil, agricultural soil, agricultural soil in a greenhouse, grain, including barley, canola, corn, flour, millet, rice, sorghum, soybean, and wheat, agricultural produce and consumable commodities, including fesh and dried fruits, such as apples, apricots, bananas, oranges, dates, grapes, plums, figs, and raisins, nuts, such as almonds, brazil nuts, cashew nuts, chestnuts, hazelnuts, macademia nuts, pecan nuts, pistachio nuts, sunflower seeds, and peanuts, coffee, tobacco, cocoa, wood, wood products, seeds such as grass seeds, vegetable seeds, flower seeds, cotton seeds, animal litter, used animal litter, used poultry litter, and combinations thereof

### DETAILED DESCRIPTION

The present invention will be described in the following with respect to particular embodiments and with reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B. Accordingly, the terms "comprising" and "including" encompass the more restrictive terms "consisting essentially of" and "consisting of".

In the context of the present invention, the term "granule" refers to an agglomeration of finely divided solid particles by means of drying, a binder or pressure, said granule having a size larger than powder particles, more particularly the granule diameter being larger than 100 µm, and comprising the active ingredient.

As used herein, the term "granule core" refers to the central part of the coated granule containing the active ingredient.

In the context of the present invention, the diameter of a particle or granule is defined as the diameter of the smallest sphere which is able to fully encompass or surround the particle or granule.

In the context of the present invention, the diameter of an individual particle or granule may be determined using the appropriate measuring apparatus, such as a calliper or a micrometer, depending on the desired accuracy.

In the context of the present invention, the particle size distribution of a granulate may readily be determined by dry sieving, if necessary in an inert atmosphere, on the basis of CIPAC Method M170. For the smaller particle diameters reaching down to 100 micrometer and even below, i.e. down to about 19 micrometer, we prefer to use a laser diffraction method based on CIPAC Method M187. Dust content may preferably be determined according to CIPAC Method 171. Of course, these methods may need to be adapted according to the sensitivities, such as for water and/or oxygen, of the active ingredient of the material being subject to the measurement technique.

In the context of the present invention, the "envelope volume" is defined as the volume specified in the definition of the envelope density of a particle provided in ASTM D3766-08 (reapproved 2013) "Standard Terminology Relating to Catalysts and Catalysis". The envelope volume is the sum of the volumes of: the solid in each piece and the voids within that piece, i.e. the volume within close-fitting imaginary envelopes completely surrounding each piece. The "envelope" of a particle is a theoretical surface that encloses the particle and that bridges openings to the interior of the particle.

The term "hydrate" refers to a chemical compound which is bound to at least one water molecule, such as in a crystal containing together with the compound some amount of crystal water. In a hydrate, the water molecules are typically bound rather loosely by hydrogen bonding or by a covalent coordination bond, or are incorporated into the compound without chemical alteration of the molecules of the compound.

The term "controlled release" within the context of the present invention corresponds to means for adjusting the release rate, e.g. vapour transmission rate, of a volatile chemical or substance by comparison to the release rate that would be achieved without any "controlled release" measures. Preferably the active agent is released at a specific target environment and is not released unless this environment is reached, thus altering the release rate of a volatile chemical or substance and/or maintaining its properties over extended periods when used. For example, controlled release formulations may also be used for avoiding that mixtures of active agents react with each other before their application.

Controlled release, thus, may mean immediate release under certain conditions, e.g. depending on the temperature, pH or the chemical composition at the target environment. Preferred controlled release formulations have following properties:
(i) retention of a sufficient quantity of active ingredient or agent prior to the release at the target environment
(ii) release of a sufficient quantity of active agent at the target environment, and
(iii) sufficient protection of the active ingredient by the carrier prior to delivery and release at the target environment so that it remains sufficiently active.

The term "dosage form", as used herein, refers to a physically discrete unit of the preparation appropriate for the soil or air-tight volume, containing a quantity of the active ingredient calculated to produce the desired effect in association with the selected agronomical acceptable carriers, and still being safe for the environment/ecosystems. Procedures for determining the appropriate dosage unit are well known to those skilled in the art.

As used herein, the term "pH modulator" or "pH modifier" defines compounds which, when added to an environment, are able to regulate its pH. Suitable pH-modulators are organic and/or inorganic acids such as citric acid, gluconic acid, acetic acid, hydrochloric acid, phosphoric acids as well as their salts, and organic and inorganic bases such as isopropylamine, tallow fat amines or ammonia, as well as their salts. Suitable pH-modulators also comprise mono, di, and tricarboxylic acids as general classes of organic acids, and which include straight chain or branched molecular backbones, which may contain an aryl or phenyl group. The inorganic acids may contain a phosphorus atom, a sulphur atom, a halogen atom, a nitrogen atom. Further suitable pH-modulators include amines in all various forms and shapes, as well as ammonia.

The terms "oxidizing agent", "oxidant", or "oxidizer" refers in the context of the present invention to any compound or combination of compounds capable of oxidizing a desired functional group. An oxidation results in an overall loss of electrons, or in the case of organic chemistry, of hydrogen atoms, from the functional group. The oxidation may be one part of an oxidation-reduction ("redox") reaction, whereby for instance the active ingredient according to the present invention is oxidised, and another molecule or ion is reduced. Non-limiting examples of suitable oxidizing agents include hydrogen peroxide, persulfate salts (e.g. ammonium persulfate), ferric nitrate, solid forms of hydrogen peroxide, and combinations thereof. Solid forms of hydrogen peroxide include sodium percarbonate, calcium peroxide, and magnesium peroxide, which liberate free hydrogen peroxide when dissolved in water. Preferably, the oxidizing agent is hydrogen peroxide.

The term "wet-granulation", as used herein, involves the process steps of dry mixing, granulation, wet sieving, drying, dry rasping/milling and then lubrication of granules before compression.

The term "particle size distribution" as used herein refers to the relative percentages by weight or volume of each of the different size fractions of a particulate matter. The particle size distributions for the present application may preferably be measured using laser light diffraction equipment, such as are sold by Malvern Instruments Ltd., Malvern, Worcestershire, United Kingdom. Other types of equipment are also suitable for particle size distribution determinations.

The term "bulk density," as used herein, refers to a property of powders and is defined as the mass of a large number of particles of the material divided by the total volume they occupy together. The total volume includes particle volume, inter-particle void volume and internal pore volume. Bulk density may be determined as follows: a graduated cylinder is filled with a certain amount of material, and the is volume recorded to determine the material bulk density.

The term "tap density" refers to the volume occupied by the solid formulation in a container, such as a measuring cylinder, after gentle tapping to allow the solid to settle, divided by the weight of the solid. The tap density may be determined with a help of a Tap Density Tester by exposing the material to 100 taps per test and recording the new volume.

The term "mass attrition resistance" refers to the resistance of a granular material to wear. It is a percentage determined according to method MT 178 CIPAC, Book H: prior to the test the granule is sieved on a 125 µm sieve in order to remove fine particles. A known amount of this dust-free granule is transferred to a glass bottle and is then subjected to a rolling movement with an equal amount of glass beads. After rolling for a specified period, the attrition resistance is determined by sieving again on a 125 µm sieve and weighing the material retained on the sieve.

An "effective amount", as used herein, is an amount sufficient to affect the beneficial or desired results. An effective amount may be administered in one or more administrations. In terms of treatment, inhibition or protection, an effective amount is that amount sufficient to ameliorate, stabilize, reverse, slow or delay progression of the target pests.

The term "fumigant" refers to a pesticide that has a relatively high vapour pressure and hence is able to exist as a gas in sufficient concentrations to kill pests in soil or enclosed spaces. The toxicity of the fumigant is proportional to its concentration and the exposure time. They are characterized by a good capacity for diffusion and act by penetrating the pest's respiratory system or being absorbed through the pest's cuticle. Fumigants are applied to control stored product pests under gas proof sheets, in gas sealed rooms or buildings, in special chambers, or in soil.

In an embodiment of the present invention, the granule has a particle diameter of at least 250 µm, preferably at least 300 µm, more preferably at least 400 µm, even more preferably at least 500 µm, yet more preferably at least 600 µm, preferably at least 700 µm, more preferably at least 800 µm, even more preferably at least 900 um.

In an embodiment, the granulate according to the present invention has an average particle diameter of at least 250 µm, preferably at least 300 µm, more preferably at least 400 µm, even more preferably at least 500 µm, yet more preferably at least 600 µm, preferably at least 700 µm, more preferably at least 800 µm, even more preferably at least 900 µm.

In an embodiment of the present invention, the granule has a particle diameter of at most 5000 µm, preferably at most 4000 µm, more preferably at most 3000 µm, even more preferably at most 2000 µm, yet more preferably at most 1500 µm, preferably at most 1400 µm, more preferably at most 1300 µm, even more preferably at most 1200 µm.

In an embodiment, the granulate according to the present invention has an average particle diameter of at most 5000 µm, preferably at most 4000 µm, more preferably at most 3000 µm, even more preferably at most 2000 µm, yet more preferably at most 1500 µm, preferably at most 1400 µm, more preferably at most 1300 µm, even more preferably at most 1200 µm.

In an embodiment, the granule according to the present invention wherein the envelope volume of the granule represents at least 61.0%, preferably at least 62.0%, more preferably at least 63.0%, even more preferably at least 64.0%, yet more preferably at least 65.0%, even yet more preferably at least 66.0%, preferably at least 67.0%, more preferably at least 68.0%, even more preferably at least 69.0%, yet more preferably at least 70.0%, even yet more preferably at least 71.0%, preferably at least 72.0%, more preferably at least 73.0%, even more preferably at least 74.0%, yet more preferably at least 75.0%, even yet more preferably at least 76.0%, preferably at least 77.0%, more preferably at least 78.0%, even more preferably at least 79.0%, yet more preferably at least 80.0%, even yet more preferably at least 85.0% of the volume of the sphere having the same diameter as the granule.

The applicants have found that the higher portion of the sphere volume which is occupied by the actual granule, the less the granule has sharp edges which are susceptible to damage by attrition when the granule is handled in bulk. This feature thus brings the advantage that the risk for dust formation during the handling of the granule is reduced, thereby reducing the risk for the adverse effects already mentioned above in association with dust and dusting.

In an embodiment, the granule according to the present invention is having a shape of which the outer surfaces of the envelope volume are curved, preferably the surfaces being substantially convex in their curvature, and optionally the envelope volume having no flat side. The applicants have found that the more of the outer surfaces are curved, and hence the less of those surfaces are flat, that the risk for agglomeration of granules is reduced, which is advantageous for the granule being and remaining free flowing, an important advantage when the granule is used in bulk.

In an embodiment, the granule according to the present invention is having a shape which is substantially convex on all surfaces. This brings the advantage that the free flowing property of the granule is further enhanced, and that the risk for dust formation due to attrition is further reduced.

In an embodiment, the granule according to the present invention has not been shaped in a mould. The applicants prefer to avoid mould-shaped granules, because these typically bring the disadvantage of sharp edges, which bring the disadvantages already mentioned above in terms of dust formation and flowability when used in bulk.

In an embodiment, the granule according to the present invention is rollable over a plane in the direction of at least two intersecting lines. The applicants submit that this is another way of specifying that the envelope volume of the granule occupies a higher portion of the volume occupied by a sphere having as diameter the particle diameter of the granule, as compared to a particle having a cylindrical shape.

In an embodiment of the granulate according to the present invention, at least 20% by weight of the granulate consists of the granules according to the present invention, based on the total weight of the granulate, preferably at least 40%, more preferably at least 60%, even more preferably at least 80%, yet more preferably at least 90%, preferably at least 95%, more preferably at least 98%, and even more preferably at least 99%.

In an embodiment of the granulate according to the present invention, at least 90%wt of the granules have a particle diameter of at least 100 µm on dry sieving, preferably at least 93%wt, more preferably at least 95%wt, even more preferably at least 97%wt, yet more preferably at least 99%wt. In an alternative of this embodiment, the specified portion of the granules have a particle diameter of at least 120 µm on dry sieving, preferably at least 150 µm on dry sieving, more preferably at least 200 µm on dry sieving. This feature brings the advantage that the granulate may be categorised as "non-dusting" under various local legislative provisions, which results in a reduction in the requirements for protection, or the prescribed use of personal protection equipment, of the personnel handling the granulate.

In an embodiment of the granulate according to the present invention, at least 75% by weight of the particles have a particle size of at least 0.30 mm, preferably at least 80%, more preferably at least 90%, even more preferably at least 95%, yet more preferably at least 98% by weight, preferably the thereby specified % by weight of the particles having a particle size of at least 0.35 mm, more preferably at least 0.40 mm, even more preferably at least 0.45 mm and yet more preferably at least 0.50 mm. The applicants have found that the larger and the more uniform the particle size of the particles in the granulate, the more free-flowing the granulate is, and the lower the risk that some of the particles reduce to the size of dust, with the disadvantages already mentioned herein above. This feature also brings the advantage that the MITC release picks up sharper. This means that for instance the lag time before the MITC release picks up significantly is sharper defined, and also that the peak release is reached faster. Both aspects contribute to a more effective use of the active ingredient, which allows for a more efficient use of the active ingredient.

In an embodiment of the granulate according to the present invention, at least 75% by weight of the particles have a particle size of at most 2.0 mm, preferably at least 80%, more preferably at least 90%, even more preferably at least 95%, yet more preferably at least 98% by weight, preferably the specified % by weight of the particles having a particle size of at most 1.8 mm, more preferably at most 1.6 mm, even more preferably at most 1.4 mm and yet more preferably at most 1.2 mm. Also this feature contributes to a better defined and shaper release profile of the MITC over time, closer approaching the "ideal' release profile as discussed above. This increases the effectiveness of the fumigation and allows for a more efficient use of the fumigant.

In an embodiment of the granulate according to the present invention, the particle size distribution of the granulate is unimodal. The applicants have found that this also contributes to a better defined and sharper release profile, approaching closer the "ideal" profile discussed above.

In an embodiment of the granulate according to the present invention, at least 50% by weight of the active ingredient is selected from the ammonium, sodium, potassium and calcium salt of methylaminomethanedithionate, and combinations thereof, and the active ingredient is present in a concentration of at least 80% by weight, based on the total weight of the granulate, preferably at least 85%, more preferably at least 90%, even more preferably at least 93%, yet more preferably at least 95%, preferably at least 96%, even more preferably at least 97%, yet more preferably at least 98% by weight, based on the total weight of the granulate.

In an embodiment of the granulate according to the present invention, the active ingredient is sodium metam. The applicants have found that sodium metam is more readily available as compared to its counterparts listed. Sodium metam is already commercially available as a 40-42%wt aqueous solution, which is for instance readily suitable for the spray granulation technique according to the present invention, and is a very suitable starting material for producing the granule and the granulate according to the present invention. The applicants have also found that when the active ingredient is sodium metam, that the granulate may readily be produced with less, and even without needing any, binder material. This brings the advantage of a more concentrated fumigant product, which may bring further effectiveness and efficiency benefits.

In an embodiment of the granulate according to the present invention, the active ingredient is in its hydrate form. The applicants have found that the water part of the hydrate form is not necessarily impairing the action or activity of the active ingredient. On the contrary, the applicants have found that the presence of the water part of the hydrate form is beneficial in bringing a fast buildup of the MITC release, once this has been triggered by one of the suitable triggers listed of the oxidation of the active ingredient.

In an embodiment of the granulate according to the present invention, at least 50% by weight of the active ingredient is the oxidized form of N-methyldithiocarbamate, and the active ingredient is present in a concentration of at least 54% by weight, based on the total weight of the granulate, preferably at least 58%, more preferably at least 60%, even more preferably at least 62%, yet more preferably at least 65%, preferably at least 68%, even more preferably at least 70%, yet more preferably at least 72% by weight, based on the total weight of the granulate. The applicants have found that the higher the concentration of the active ingredient, the more effective and the more efficient the granulate is in achieving the desired effects, and the better the ideal release profile may be approached, with the associated benefits.

In an embodiment of the granulate according to the present invention, at least 50% by weight of the active ingredient is bis-(methylthiocarbamoyl)-sulphide, also known as dimethyl thiuram disulfide (DMTD), also known as bis-metam. The applicants have found that this active ingredient is also a very convenient active ingredient, because it may be readily prepared from suitable and commercially available raw materials by relatively simple process steps.

In an embodiment according to the present invention, the further comprises a binding agent, preferably a binding agent selected from the list consisting of gelatin, gelatin hydrolysate, polyvinyl alcohol (PVA), shellac, an alginate such as sodium alginate in combination with CaCl2, chitin, sodium silicate, acacia gum, stearates, cellulose, more particularly hydroxyethyl cellulose, ethyl cellulose, hydroxypropyl methyl cellulose (HPMC) and (carboxy)methyl cellulose, (poly)saccharides, such as for instance saccharose, glucose, sorbitol, maltose, sucrose, starch (such as starch derived from wheat, potato, grain), alcohols (polyvinyl alcohol/acetate, polyethylene glycol), thermoplastic coating materials including vinyl resins such as poly(vinyl acetate), poly(vinyl alcohol), poly(vinyl chloride), poly(vinylidene chloride), poly(vinyl pyrrolidone), poly(vinyl acetal), poly(vinyl methylacetamide); polyolefines such as polyethylene, polypropylene, polyisobutylene; styrene-based polymers; acrylic polymers; polyesters such as poly(alkylene terephthalate), poly(caprolactone); poly(oxy alkylene)s, such as poly(ethylene oxide), poly(propylene oxide); cellulose derivatives, such as cellulose acetate; polyamides; polyamines; polycarbonates; polyimides; polysulfones; polysulfides; polysaccharides and the like, and combinations thereof. The applicants have found that such binder is particularly useful when the active ingredient is the oxidised form of N-methyldithiocarbamate.

In an embodiment of the granulate according to the present invention, the coating is biodegradable, preferably the coating passing at least one of the ready biodegradability tests of OECD Guideline 301, the version which was adopted 17 July 1992. This brings the advantage that less to no long time residue remains from the fumigation treatment, which may be advantageous in soil fumigation, but also in some of the other applications described in this document.

In an embodiment of the granulate according to the present invention, the coating is permeable to at least one component selected from water, oxygen, oxidizing agents. This brings the advantage that such component is able to readily reach the active ingredient in the granules, and that the oxidation reaction may thus be triggered readily and timely as intended.

In an embodiment of the granulate according to the present invention, the coating is based on a compound selected from gelatin, gelatin hydrolysate, polyvinyl alcohol (PVA), shellac, an alginate such as sodium alginate in combination with CaCl₂, chitin, sodium silicate, acacia gum, stearates, cellulose, more particularly hydroxyethylcellulose, ethyl cellulose, hydroxypropylmethylcellulose (HPMC) and (carboxy)methyl cellulose, (poly)saccharides, such as for instance saccharose, glucose, sorbitol, maltose, sucrose, starch (such as starch derived from wheat, potato, grain), alcohols (polyvinyl alcohol/acetate, polyethylene glycol), thermoplastic coating materials including vinyl resins such as poly(vinyl acetate), poly(vinyl alcohol), poly(vinyl chloride), poly(vinylidene chloride), poly(vinyl pyrrolidone), poly(vinyl acetal), poly(vinyl methylacetamide); polyolefines such as polyethylene, polypropylene, polyisobutylene; styrene-based polymers; acrylic polymers; polyesters such as poly(alkylene terephthalate), poly(caprolactone); poly(oxy alkylene)s, such as poly(ethylene oxide), poly(propylene oxide); cellulose derivatives, such as celluloseacetate; polyamides; polyamines; polycarbonates; polyimides; polysulfones; polysulfides; polysaccharides and the like, and combinations thereof.

In an embodiment of the granulate according to the present invention, the coating comprises at most 25% by weight of the total weight of the granulate, preferably at most 20%, more preferably at most 15%, and optionally at least 1.0%, preferably at least 2.0%, more preferably at least 3.0% of the total weight of the granulate. The applicants have found that these amounts are suitable for providing adequate protection of the active ingredient inside the granule core, such that the timing of the MITC release is better predictable, which brings advantages in terms of effectiveness and efficiency of the fumigant in its application.

In an embodiment according to the present invention, the granulate is having a bulk density in the range of 0.40 to 0.90 g/cm³, preferably at least 0.45 g/cm³, more preferably at least 0.50 g/cm³, even more preferably at least 0.55 g/cm³, yet more preferably at least 0.58 g/cm³, and optionally at most 0.85 g/cm³, preferably at most 0.80 g/cm³, more preferably at most 0.78 g/cm³.

In an embodiment according to the present invention, the granulate is having a tapped bulk density in the range of 0.50 to 0.90 g/cm³, preferably at least 0.55 g/cm³, more preferably at least 0.57 g/cm³, even more preferably at least 0.60 g/cm³, yet more preferably at least 0.63 g/cm³, and optionally at most 0.87 g/cm³, preferably at most 0.85 g/cm³, more preferably at most 0.83 g/_{cm}³.

In an embodiment according to the present invention, the granulate is having a mass attrition resistance of at least 98.00%, determined according to method MT 178 CIPAC, Book H, preferably at least 98.50%, more preferably at least 99.00%, even more preferably at least 99.50%. The applicants have found that this reduces even further the risk for dusting during the bulk handling of the fumigant according to the present invention.

In an embodiment of the process according to the present invention, the active ingredient comprises methylaminomethanedithionate and the aqueous form of the active ingredient is a solution of methylaminomethanedithionate in water having a concentration in the range of 20-60% by weight, preferably at least 30%, more preferably at least 40%, and optionally at most 50%, preferably at most 45%, more preferably at most 42% by weight.

In an embodiment of the process according to the present invention, the active ingredient comprises N,N'-dimethylthiuramdisulfide, a.k.a. bis-metam, and the aqueous form of the active ingredient is produced by contacting an aqueous solution of sodium metam with a stoichiometric amount of an oxidizing agent, preferably the oxidizing agent being a mixture of about equimolar amounts of H₂O₂ and H₂SO₄.

In an embodiment according to the present invention, the process further comprises the step of adding to the aqueous form of the active ingredient at least one of the additives selected from the list consisting of a dispersing agent, an antifoam agent, a wetting agent, a binding agent, and combinations thereof, whereby the binding agent is preferably selected from the list consisting of polyvinyl alcohol, polyvinyl acetate, cellulose, cellulose derivatives, a metal stearate, mono- and disaccharides, starches, acacia gum, gelatine and gelatine hydrolysate, and combinations thereof.

In an embodiment according to the present invention, the process further comprises the step of producing metam sodium from mono methylamine, carbon disulfide, and sodium hydroxide. The process steps for producing metam sodium are well known in the art. A suitable process for the production of metam sodium is for instance disclosed in CN102391165.

In an embodiment, the process according to the present invention is further comprising the step of coating the granule or the granulate with a coating, preferably by spraying the granule or the granulate with a solution of the coating material in a solvent selected from an organic solvent, water, and mixtures thereof, and drying the sprayed granule or granulate to obtain a dried coated granule or granulate.

In an embodiment, the process according to the present invention is further comprising the step of fumigating with the granule or the granulate the volume of a building or container, the container preferably containing a substrate selected from the list consisting of grain, including barley, canola, corn, flour, millet, rice, sorghum, soybean, oats, triticale, and wheat, any other agricultural produce and consumable commodities, including fresh and dried fruits, such as apples, apricots, bananas, oranges, dates, grapes, plums, figs, and raisins, nuts, such as almonds, Brazil nuts, cashew nuts, chestnuts, hazelnuts, macademia nuts, pecan nuts, pistachio nuts, walnuts, sunflower seeds, and peanuts, coffee, tobacco, cocoa, wood, wood products, seeds such as grass seed, flower seeds, vegetable seeds, cotton seeds, animal litter, used animal litter, used poultry litter, and combinations thereof, the container optionally being selected from a grain elevator, a grain bin, a flour mill, a ship, a trailer, a railcar, a storage bag, a storage silo, and combinations thereof.

In an embodiment of the process according to the present invention, the temperature inside the building or container is raised during the fumigation step, preferably to a temperature of at least 5°C, more preferably at least 10°C, even more preferably at least 15°C, yet more preferably at least 20°C. The applicants have found that at such temperatures the living creatures which are the target of the fumigation breathe more, and hence are more susceptible for the fumigation treatment. This increases the effectiveness of the fumigation step.

In an embodiment, the process according to the present invention is further comprising the step of contacting the granule or the granulate with an agent selected from an acid, a base, moisture, humid gas, such as humid air, an oxidizing agent, and combinations thereof. The applicants have found that in some applications, it may be beneficial to trigger the oxidation reaction by this additional step, such that the MITC release pattern may be sharper and hence the fumigation more effective. The applicants have found that this triggering benefit also applies with fumigation performed with granules, and/or granulates of which the granules, have an envelope volume which represents less than 60.0% of the volume occupied by a sphere having as diameter the particle diameter of the granule. The applicants have found that the triggering benefit applies irrespective of the shape of the granule or granules in the granulate.

In an embodiment of the process according to the present invention, the concentration of the methyl isothiocyanate generated from the active ingredient in the fumigation gas is kept below the lower flammability limit of the methyl isothiocyanate in mixture with air. This reduces and may even avoid any risk for explosion from and during the fumigation treatment.

In an embodiment of the process according to the present invention, the fumigation gas is further diluted with a non-combustible gas. This is another and possibly complementary way to reduce and/or avoid explosion risks from and during the fumigation treatment.

In an embodiment, the process according to the the present invention is further comprising, prior to the fumigation, the step of protecting sensitive electric or electronic parts of the building or container from exposure to the fumigant vapours, preferably by enclosing the parts in air-tight containers or bags, more preferably by also providing positive pressure inside the air-tight containers or bags. This brings the advantage that adverse effects of the fumigant vapours on those parts may be avoided, and also that any ignition sources which may be present in such parts, remain free from any combustible gas generated as part of the fumigation step.

In an embodiment, the process according to the present invention is further comprising the step of fumigating soil with the granule or the granulate, preferably the soil being agricultural or horticultural soil, more preferably the soil being topsoil, preferably the granule or granulate being coated.

In an embodiment of the use according to the present invention, the use is further comprising the step of contacting the granule or the granulate with an agent selected from an acid, a base, moisture, humid gas, such as humid air, an oxidizing agent, and combinations thereof. This brings the advantages already mentioned above for this very same feature in another context.

In the context of the present invention, the envelope volume of a granule is preferably determined by mercury porosimetry, for instance as described by Paul A. Webb, "An Introduction to The Physical Characterization of Materials by Mercury Intrusion Porosimetry with Emphasis on Reduction and Presentation of Experimental Data", Micromeritics Instrument Corp., Jan 2001, www.micromeritics.com, or by Paul A. Webb, "Volume and Density Determinations for Particle Technologists", February 2001, Micromeritics Instrument Corp., www.micromeritics.com. With a single particle such as the granule according to the present invention, the envelope volume is the volume registered at point A of the curve, i.e. when the pressure is still below the so-called break-through pressure.

In the context of the present invention, the envelope volume of a granulate is preferably also determined by mercury porosimetry. Referring to the same references as above, for a granulate the envelope volume should exclude the interparticle voids. Therefore the envelope volume is the volume registered at point B of the curve, when the interparticle voids are filled but before the pores within the individual particles become filled.

Having now fully described this invention, it will be appreciated by those skilled in the art that the invention can be performed within a wide range of parameters within what is claimed, without departing from the scope of the invention, as defined by the claims.

## Claims

1. A granule containing as active ingredient a compound selected from the ammonium, alkali metal and alkaline earth metal salts, such as the sodium, potassium, and calcium salt, of methylaminomethanedithionate, an oxidized form of N-methyldithiocarbamate that is capable of generating methyl isothiocyanate upon further oxidation, and combinations of such compounds, wherein the granule has a particle diameter in the range of 200 to 10,000 µm, and whereby the granule contains the active ingredient in a concentration of at least 75% by weight when the active ingredient is the salt of methylaminomethanedithionate and at least 50% by weight when the active ingredient is the oxidized form of N-methyldithiocarbamate, and whereby the envelope volume of the granule represents at least 60.0% of the volume occupied by a sphere having as diameter the particle diameter of the granule.

2. The granule according to claim 1 having a shape of which the outer surfaces of the envelope volume are curved, preferably the envelope volume having no flat side.

3. The granule according to any one of the preceding claims having a shape which is substantially convex on all surfaces.

4. A granulate containing the granule according to any one of the preceding claims, the granulate having a weight average particle diameter in the range of 250 to 10,000 µm and whereby the granulate contains the active ingredient in a concentration of at least 75% by weight when the active ingredient is the salt of methylaminomethanedithionate and at least 50% by weight when the active ingredient is the oxidized form of N-methyldithiocarbamate.

5. The granulate according to the preceding claim wherein at least 20% by weight of the granulate consists of the granules according to any one of claims 1-6, based on the total weight of the granulate.

6. The granulate according to claim 4 or 5 in which at least 90%wt of the granules have a particle diameter of at least 100 µm on dry sieving.

7. The granulate according to any one of claims 4-6 wherein at least 50% by weight of the active ingredient is selected from the ammonium, sodium, potassium and calcium salt of methylaminomethanedithionate, and combinations thereof, and the active ingredient is present in a concentration of at least 80% by weight, based on the total weight of the granulate.

8. The granulate according to any one of claims 4-7 wherein at least 50% by weight of the active ingredient is the oxidized form of N-methyldithiocarbamate, and the active ingredient is present in a concentration of at least 54% by weight, based on the total weight of the granulate.

9. The granulate according to any one of claims 4-8 wherein the granules are coated, whereby the coating may be organic and/or inorganic.

10. A process for the production of the granule according to any one of claims 1-3 or the granulate according to any one of claims 4-9 comprising the step of spray granulating an aqueous form of the active ingredient in a spray dryer using a heated flow of an non-oxidizing gas, preferably by using the gas flow to keep a bed of the granulate in fluidized condition.

11. The process according to the preceding claim wherein the active ingredient comprises methylaminomethanedithionate and wherein the aqueous form of the active ingredient is a solution of methylaminomethanedithionate in water having a concentration in the range of 20-60% by weight.

12. The process according to any one of claims 10-11 further comprising the step of coating the granule or the granulate with a coating.

13. The process according to any one of claims 10-12 further comprising the step of fumigating with the granule or the granulate the volume of a building or container.

14. The process according to any one of claims 10-13 further comprising the step of fumigating soil with the granule or the granulate.

15. Use of the granule according to any one of claims 1 to 3 or the granulate according to any one of claims 4 to 9 for the fumigation of a substance selected from the list consisting of soil, agricultural soil, agricultural soil in a greenhouse, grain, including barley, canola, corn, flour, millet, rice, sorghum, soybean, and wheat, agricultural produce and consumable commodities, including fresh and dried fruits, such as apples, apricots, bananas, oranges, dates, grapes, plums, figs and raisins, nuts, such as almonds, brazil nuts, cashew nuts, chestnuts, hazelnuts, macademia nuts, pecan nuts, pistachio nuts, sunflower seeds, and peanuts, coffee, tobacco, cocoa, wood, wood products, seeds such as grass seeds, flower seeds, vegetable seeds, cotton seeds, animal litter, used animal litter, used poultry litter, and combinations thereof.
